# EUROPÄISCHE PATENTSCHRIFT

(11) **EP 0 806 587 B1**
(45) Veröffentlichungstag und Bekanntmachung des Hinweises auf die Patenterteilung: **06.06.2001**
(21) Anmeldenummer: 97106798.8
(22) Anmeldetag: 24.04.1997
(51) Int. Cl.: F16F 9/346

(54) **Kolben-Zylinderaggregat mit wegabhängigem Dämpfkraftfeld**
Piston-cylinder unit with path-dependent damping characteristics
Unité piston-cyclindre avec caractéristiques d'amortissement variables en fonction de la distance

(30) Priorität: 06.05.1996 DE 19618055
(43) Veröffentlichungstag der Anmeldung: 12.11.1997
(73) Patentinhaber: Mannesmann Sachs Aktiengesellschaft, 97424 Schweinfurt (DE)
(72) Erfinder: Grundei, Manfred, 97464 Niederwerrn (DE); Reimer, Hans, 97534 Waigolshausen (DE); Holzapfel, Harald, 97422 Schweinfurt (DE)

(56) Entgegenhaltungen:
- DE-A- 4 212 078
- DE-C- 969 377
- DE-C- 4 410 996

## Beschreibung

Die Erfindung betrifft ein Kolben-Zylinderaggregat entsprechend dem Oberbegriff von Patentanspruch 1.

Aus der DE 42 12 078 A1 ist ein derartiges Kolben-Zylinderaggregat bekannt, das als ein Endlagendämpfer ausgeführt ist. Dieser Endlagendämpfer umfaßt ein zylindrisches Druckrohr, das einerseits von einem Boden und andererseits von einer Dichtungs-Führungseinheit axial begrenzt wird. Des weiteren gehört zum Kolben-Zylinderaggregat ein Kolbensystem, das das Druckrohr in zwei Arbeitsräume unterteilt, wobei das Kolbensystem Durchflußkanäle besitzt, die mit Rückschlagventilen bestückt sind. Das Kolben-Zylinderaggregat verfügt über einen Hubbereich, der von. der relativen Position zwischen der Kolbenstange und dem Druckrohr gebildet wird, in dem jeweils keine Dämpfkraft vorliegt. In den Endbereichen des Kolbenstangenhubes wirkt jeweils nur ein Kolben des Kolbensystems, da die Kolben jeweils ein Rückschlagventil aufweisen, so daß ein Kolben für eine Bewegungsrichtung ein Dämpfkraft und für die andere Durchströmungsrichtung wegen des Rückschlagventils keine Dämpfkraft erzeugt.

Die DE-PS 12 51 165 beschreibt einen Stoßdämpfer, der einen Kolben an einer Kolbenstange aufweist, bei dem der Kolben aus zwei Kolbenköpfen besteht. Der Kolben wirkt mit einer Stange, die am Boden des Stoßdämpfers befestigt ist, zusammen. Die Kolbenstange hält den Kolben am Außendurchmesser, so daß in der Mitte eine Mittelöffnung für jeden Kolbenkopf ausgebildet werden kann. Diese Mittelöffnungen wirken mit der Stange als Drosseln, wobei Rückschlagventile an den Kolbenköpfen angeordnet sind, die dafür sorgen, daß ausgehend von den jeweiligen Endlagen keine Dämpfkraft erzeugt wird. In einem mittleren Hubbereich erzeugt der Stoßdämpfer ebenfalls keine Dämpfkraft, da die Stange auf einer definierten Länge eine Durchmesserreduzierung aufweist, so daß die Mittelöffnungen praktisch keine Dämpfkräfte erzeugen können.

Insgesamt wird die Dämpfkraft nur vom momentanen Querschnitt erzeugt, der sich durch die Überdeckung einer Mittelöffnungen mit der Stange ergibt. Die Kolbenköpfe sind durch ihre Rückschlagventile an der Dämpfkraftwirkung nicht beteiligt.

Die DE 34 46 133 offenbart einen Schwingungsdämpfer mit veränderbarer Dämpfkraft, bei dem ein Bypass innerhalb einer Dämpfventileinrichtung mittels einer Verstelleinrichtung derart geschaltet werden kann, so daß jeweils ein Dämpfventilsystem innerhalb der Dämpfventileinrichtung eine Dämpfkraft erzeugt oder beide Dämpfventilsysteme wirksam sind.

Aufgabe der vorliegenden Erfindung ist es, ein Kolben-Zylinderaggregat zu realisieren, daß unabhängig von einer äußeren Steuerung eine beladungsabhängige Dämpfkraft erzeugt.

Erfindungsgemäß wird die Aufgabe dadurch gelöst, indem die beiden Kolben im Verhältnis zum Bypass einen Abstand aufweisen, so daß in Abhängigkeit der Hublage beide Kolben, ein Kolben oder keiner der Kolben eine Dämpfkraft erzeugt/erzeugen, wobei jeder der beiden Kolben außerhalb des Bypasses in beiden Hubrichtungen dämpft. Je nach Hublage oder Einfederungsweg wird die Dämpfkraft unter Verzicht von aufwendigen Stellmitteln den Erfordernissen angepaßt. Dabei sind beide Kolben für beide Durchströmungsrichtungen mit Dämpfventilen versehen. Durch eine unterschiedliche Dämpfventilausgestaltung kann eine mehr oder weniger stark unsymmetrische Dämpfkraftkennlinie erreicht werden.

Dabei besteht der Bypass aus mindestens einer Sicke mit einer im wesentlichen axialen Ausrichtung im Zylinderrohr. Diese Art des Bypasses läßt sich relativ leicht und ausreichend präzise ausformen. In konsequenter Weiterentwicklung ist/sind die Sicke(n) in ihrem Querschnitt in Abhängigkeit der Hublage gestuft ausgeführt. Die Stufung der Bypassquerschnitt in Verbindung mit den verschiedenartig ausgelegten Dämpfventilen ermöglicht eine große Variabilität hinsichtlich des gewünschten Dämpfkraftkennfeldes. Besonders dann, wenn die Querschnittsstufen der Sicke(n) mit Übergangsquerschnitten ausgeführt sind, die eine kontinuierliche Querschnittsveränderung bewirken, stehen praktisch unbegrenzte Möglichkeiten zur Verfügung.

Anhand der folgenden Figurenbeschreibung soll die Erfindung näher erläutert werden.

Es zeigt:
- Fig. 1: Kolben-Zylinderaggregat im Längsschnitt
- Fig. 2: Zylinder als Einzelteil
- Fig. 3: Dämpfkraftkennfeld als Funktion des Weges

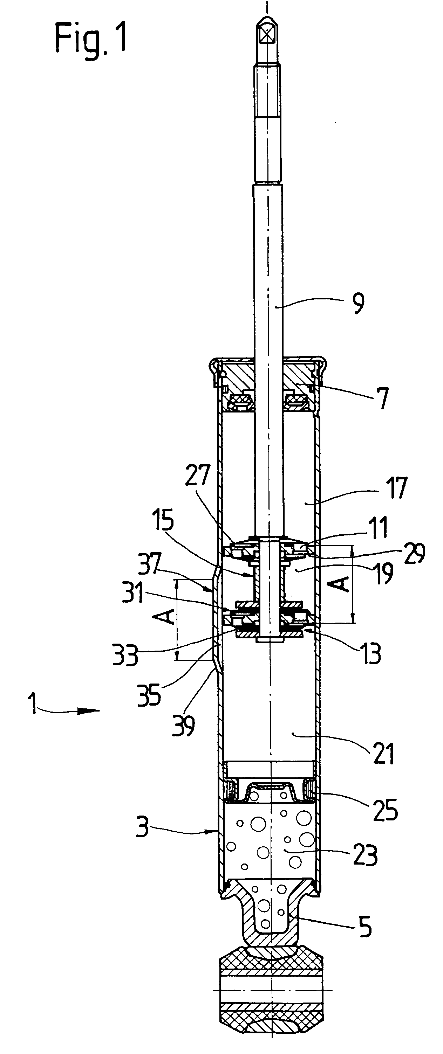

Die Fig. 1 zeigt ein Kolben-Zylinderaggregat 1 exemplarisch in der Ausführung eines Einrohr-Schwingungsdämpfers, wobei auch andere Bauformen denkbar sind. Das Kolben-Zylinderaggregat umfaßt u. a. einen Zylinder 3, der an einem Ende von einem Boden 5 und am anderen Ende von einer Kolbenstangenführung 7 gegenüber der Umgebung abgeschlossen ist. Innerhalb des Zylinders 3 ist eine Kolbenstange 9 mit einem ersten Kolben 11 und einem zweiten Kolben 13 angeordnet. Die beiden Kolben 11; 13 werden durch eine Hülse 15 auf einen Abstand A gehalten, wodurch drei Arbeitsräume 17; 19; 21 entstehen. Die beiden Arbeitsräume 17; 21 1 sind in ihrer räumlichen Größe abhängig von der momentanen Hublage der Kolbenstange 9, während der Arbeitsraum 19 zwischen den Kolben 11, 13 ein konstantes Volumen aufweist. Ausgehend vom Boden 5 erstreckt sich ein gasgefüllter Ausgleichsraum 23, der von einem Trennkolben 25 vom Arbeitsraum 21 getrennt wird.

Die Kolben sind jeweils beidseitig mit Dämpfventilen 27; 29; 31; 33 versehen, so daß in beiden Durchströmungsrichtungen die Kolben 11; 13 eine Dämpfkraft erzeugen können. Hinsichtlich der konkreten Ausgestaltung der Kolben und der Dämpfventile wird auf den gesamten Umfang der DE-44 10 996 C1 verwiesen.

Zur Erzeugung einer hublagen- bzw. wegabhängigen Dämpfkraft verfügt das Kolben-Zylinderaggregat 1 über mindestens einen Bypass 35, der von mindestens einer im wesentlichen in Achsrichtung verlaufenden Sicke 37 gebildet wird.

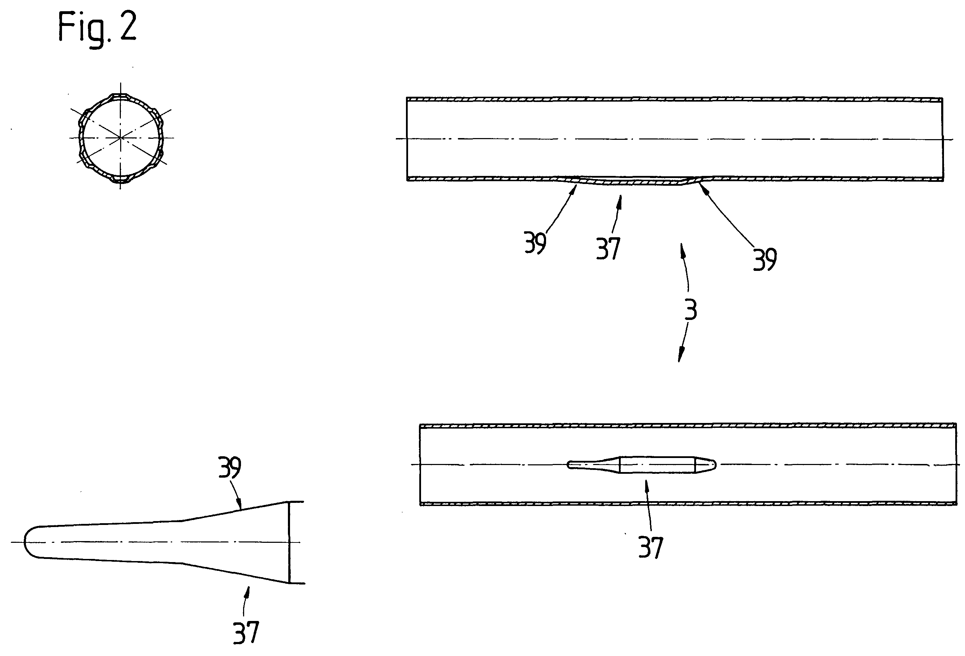

In der Fig. 2 ist der Zylinder 3 als Einzelteil in mehreren Ansichten und Detailausschnitten dargestellt. Es ist deutlich erkennbar, daß die Sicke(n) 37 in Abhängigkeit der Hublage gestuft ausgeführt ist/sind. In der weiteren Beschreibung wird stets eine Sicke beschrieben, doch soll stillschweigend davon ausgegangen werden, daß auch mehrere Sicken mit dieser Ausgestaltung möglich sind.

Zur Vermeidung von Dämpfkraftstößen bilden die Sicken Übergangsquerschnitte 39, wobei die Übergangsquerschnitte durch eine schräg verlaufende Kontur mindestens einer Sickenkante gebildet werden.

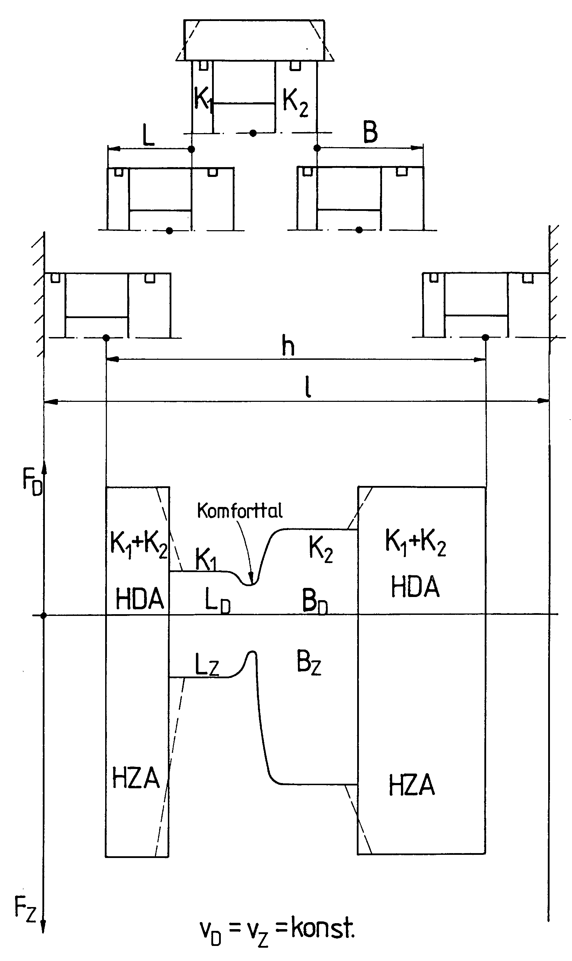

In der Fig. 3 wird der Zusammenhang der Kolbenstellung zum Bypass mit der wegabhängigen Dämpfkraft leicht verständlich. Es wird davon ausgegangen, daß der Bypass länger ist als der Abstand der beiden Kolben 11; 13 bzw. ihrer Kolbendichtungen. Befinden sich beide Kolben innerhalb des Bypasses, so liegt die minimalste Dämpfkraft des Kolben-Zylinderaggregates vor, denn das Dämpfmedium kann zwischen den Arbeitsräumen 17; 21 ausgetauscht werden, ohne das die Dämpfventile durchströmt werden müssen. Die Dämpfkraft muß nicht unbedingt gleich null sein. Man erhält aber auf jeden Fall eine ausgesprochen komfortable Dämpfkrafteinstellung, wobei dieser Punkt der Hublage der Kolbenstange bei einer normalen oder verringerten Beladung des Kraftfahrzeuges entspricht.

Verschiebt sich die Kolbenstange in eine der beiden Richtungen F_{D}, gleich Dämpfkraft in Druckrichtung oder F_{z} , so wirkt nur der Kolben, der sich außerhalb des Bypasses befindet. Dabei sind die Dämpfventile 29; 33 in ihrer Dämpfkraftwirkung L_{z} und B_{z} stärker ausgeführt als die Dämpfventile 27; 31 mit der Dämpfkraft L_{D} und B_{D}. Man geht davon aus, daß eine stärkere Dämpfwirkung bei einer größeren Beladung die Fahrsicherheit des Fahrzeugs vorteilhaft beeinflußt. Im Dämpfkraftkennfeld der Fig. 3 ist dieser Zusammenhang deutlich an der vertikalen Ausdehnung der Dämpfkraftflächen zu erkennen.

Befinden sich beide Kolben außerhalb des Bypasses, so überlagern sich die wirksamen Dämpfkräfte der Kolben zu einem hydraulischen Druckanschlag HDA und HZA jeweils auf die Zug- und Druckrichtung bezogen, da die Kolben auch hydraulisch in Reihe angeordnet sind. Das Dämpfmedium muß beispielsweise in Druckrichtung vom Arbeitsraum 21 über das Dämpfventil 31 in den Arbeitsraum 19 und von dort über das Dämpfventil 27 in den Arbeitsraum 17 strömen.

Wie aus dem Dämpfkraftkennfeld ersichtlich ist, müssen zwischen den einzelnen Dämpfkraftkennfelder keine Dämpfkraftsprünge auftreten, wenn der Bypass entsprechend angepaßte Übergangsquerschnitte aufweist. Der Einfluß der Übergangsquerschnitte wird durch die gestrichelten Linien verdeutlicht.

## Patentansprüche

1. Kolben-Zylinderaggregat, insbesondere Schwingungsdämpfer, umfassend einen Zylinder, in dem eine Kolbenstange axial beweglich angeordnet ist, wobei die Kolbenstange zwei beabstandete Kolben aufweist, die in Abhängigkeit der Hublage eine Dämpfkraft erzeugen, wobei das Kolben-Zylinderaggregat einen Bypass aufweist, so daß im Hubbereich des Bypasses eine zumindest verringerte Dämpfkraft erzeugt wird,
dadurch gekennzeichnet,
daß die beiden Kolben (11; 13) im Verhältnis zum Bypass (35) einen Abstand (A) aufweisen, so daß in Abhängigkeit der Hublage beide Kolben, ein Kolben oder kein Kolben eine Dämpfkraft erzeugt/erzeugen, wobei jeder der beiden Kolben außerhalb des Bypasses in beiden Hubrichtungen dämpft.

2. Kolben-Zylinderaggregat nach Anspruch 1,
dadurch gekennzeichnet,
daß beide Kolben (11; 13) für beide Durchströmungsrichtungen mit Dämpfventilen (27; 29; 31; 33) versehen sind.

3. Kolben-Zylinderaggregat nach Anspruch 1,
dadurch gekennzeichnet,
daß der Bypass (35) aus mindestens einer Sicke (37) mit einer im wesentlichen axialen Ausrichtung im Zylinderrohr (3) besteht.

4. Kolben-Zylinderaggregat nach Anspruch 3,
dadurch gekennzeichnet,
daß die Sicke(n) in ihrem Querschnitt in Abhängigkeit der Hublage gestuft ausgeführt sind.

5. Kolben-Zylinderaggregat nach Anspruch 4,
dadurch gekennzeichnet,
daß die Querschnittsstufen der Sicke(n) (37) mit Übergangsquerschnitten (39) ausgeführt sind, die eine kontinuierliche Querschnittsveränderung bewirken.

## Claims

1. Piston/cylinder assembly, in particular vibration damper, comprising a cylinder, in which a piston rod is arranged axially movably, the piston rod having two spaced pistons which generate a damping force as a function of the stroke position, the piston/cylinder assembly having a bypass, so that an at least reduced damping force is generated in the stroke region of the bypass, characterized in that the two pistons (11; 13) have a spacing (A) in relation to the bypass (35), so that, as a function of the stroke position, both pistons, one piston or no piston generates/generate a damping force, each of the two pistons damping in both stroke directions outside the bypass.

2. Piston/cylinder assembly according to Claim 1, characterized in that the two pistons (11; 13) are provided with damping valves (27; 29; 31; 33) for both throughflow directions.

3. Piston/cylinder assembly according to Claim 1, characterized in that the bypass (35) consists of at least one bead (37) having an essentially axial orientation in the cylinder tube (3).

4. Piston/cylinder assembly according to Claim 3, characterized in that the bead or beads is or are designed with a cross section which is stepped as a function of the stroke position.

5. Piston/cylinder assembly according to Claim 4, characterized in that the cross-sectional steps of the bead or beads (37) are designed with transitional cross sections (39) which bring about a continuous variation in cross section.

## Revendications

1. Unité cylindre-piston, en particulier amortisseur de vibrations, comprenant un cylindre, dans lequel est disposée une tige de piston mobile axialement, la tige de piston présentant deux pistons espacés qui produisent une force d'amortissement en fonction de la position de course, l'unité cylindre-piston présentant une dérivation, de sorte qu'il se produise, dans la région de la zone de course de la dérivation, une force d'amortissement au moins réduite, caractérisée en ce que les deux pistons (11; 13) présentent un écartement (A) par rapport à la dérivation (35), de sorte que les deux pistons, un piston ou aucun piston produise(nt) une force d'amortissement en fonction de la position de course, chacun des deux pistons amortissant dans les deux directions de course en dehors de la dérivation.

2. Unité cylindre-piston selon la revendication 1, caractérisée en ce que les deux pistons (11; 13) sont pourvus, pour les deux directions d'écoulement, de soupapes d'amortissement (27; 29; 31; 33).

3. Unité cylindre-piston selon la revendication 1, caractérisée en ce que la dérivation (35) se compose d'au moins une moulure (37) d'orientation essentiellement axiale dans-le tube du cylindre (3).

4. Unité cylindre-piston selon la revendication 3, caractérisée en ce que la ou les moulures sont réalisées de manière étagée en section transversale en fonction de la position de course.

5. Unité cylindre-piston selon la revendication 4, caractérisée en ce que les étages en section transversale de la ou des moulures (37) sont réalisés avec des sections transversales de transition (39) qui assurent une variation de section transversale continue.
